# EUROPEAN PATENT APPLICATION

(11) **EP 2 120 492 A1**
(43) Date of publication of application: **18.11.2009**
(21) Application number: 08009087.1
(22) Date of filing: 16.05.2008
(51) Int. Cl.: H04W 16/00

(54) **Home cell access indication to standard 3GPP terminal**

(71) Applicant: Nokia Siemens Networks Oy, 02610 Espoo (FI)
(72) Inventor: Vainola, Kati, 12240 Hikiä (FI)
(74) Representative: Bruglachner, Thomas E.

(57) **Abstract**

An access network comprises a short-range wireless network that is communicatively connected to a cellular mobile network and to a user-equipment. The short-range wireless network is provided for controlling access of the user equipment to an allowed cell of the short-range wireless network, and for sending to the user equipment a 3GPP (Third Generation Partnership Project) network message with at least one additional character. The at least one additional character is provided by the short-range wireless network for indicating the access for the user equipment to the allowed cell.

## Description

This application relates to a 3GPP (Third Generation Partnership Program) terminal. In particular, the application relates to a 3GPP terminal access of a home femto-cell.

A femto-cell AP (access point), also known as 3G access point, provides a small cellular base station, which is designed for use in residential or in a small business environment. The small cellular base station allows certain 3GPP terminals to transmit signals via the small cellular base station to a mobile communication network. The femto-cell AP is connected to the mobile communication network via an IP broadband network. The 3GPP terminals are also known as 3G (Third Generation) terminals. The 3G terminal can be in the form of a mobile phone.

The femto-cell AP offers cellular phone providers an opportunity to service a fixed mobile convergence market, which is merger of a fixed line communication market and a mobile phone communication market.

Some methods for displaying access to the femto-cell AP for a user at a display terminal have been developed. The methods can use a cell broadcast or a SIM (Subscriber Identity Module) toolkit.

In the cell broadcast method, a femto-cell AP can be configured via during an O&M (Operation and Maintenance) mode to broadcast a default cell broadcast message, such as "My home cell", to a user-equipment (UE) that is accessing a femto-cell AP. The UE is configured to receive the cell broadcast message and to display the cell broadcast message on its display terminal.

The method requires a user to wait for the cell broadcast message to appear on a display terminal before starting a mobile phone communication session to ensure that the phone communication session commences within the coverage of the femto-cell AP. The cell broadcast message appears on the display of the UE after the UE is within the femto-cell for a period so that the UE can detect the cell broadcast message.

The user may be unaware of any later change of network access. During the phone communication session, the UE may change the network access from the femto-cell AP to a macro base station when the user moves to another location that is outside a transmission range of the femto-cell AP 15. The UE can display a message on its display terminal to indicate the change of access. This message may not be visible to the user especially if the user holds the UE close to his ear during the phone communication session.

Different UEs may also display the cell broadcast message in different ways. The user may find this confusing and thereby not be able to reliably response to the cell broadcast message.

In the SIM Toolkit method, a UE (user equipment) has a SIM card that includes a SIM toolkit. The SIM toolkit is sometimes known as SIM application Toolkit (SAT). The SIM toolkit comprises a set of commands that are programmed into the SIM card. The commands direct the UE to display a message to indicate as to whether the UE is accessing the femto-cell AP or the macro base station.

A change of access display message may not be visible to the user for the above-mentioned reason. Support for the SIM Toolkit for different UEs is also unlikely to be uniform, which can lead to UE IOT (Inter-Operability Testing) issues.

Data-cards, which accompany laptop application, can provide clear and unambiguous femto-cell information to the user, during a data session. The data-card may be configured to display charging zone information, based on cell broadcast or other network broadcast data, such as LAC (Location Area Code) or a MNC (Mobile Network Code).

Tone indications can also be provided during voice calls. For example, the femto-cell AP could be configured to provide a tone at the point of network connection establishment, so that any voice calls made from a femto-cell layer will be notified to the user as the network connection is being made.

Handovers in or out of a femto-cell layer may also be accompanied by a tone indication, such as an advisory cadence, which is inserted by the femto-cell AP into a voice stream downlink. Such advisory tones are suitable for voice calls, but may be undesirable for data calls, wherein the inserted data would have deleterious side effects.

Moreover, it should be noted that such tone generation in a part of a core network, such as a MGW (Media Gateway), is not a suitable method because the femto-cell access is seen in the core network as normal 3G access and that it is not possible to identify when the tone indication should be generated.

A combination of the display and the tone indications can also be used to give user feedback of a charging status of a call or a session.

This application presents a method to indicate access to a home femto-cell network on a terminal. The home femto-cell network can have an Iu type of interface for connecting to cellular mobile network.

The home femto-cell network includes a femto-cell AP (access point) that comprises a small cellular base station that is intended for receiving signals from allowed 3GPP (Third Generation Partnership Project) terminals and transmitting the signals via a broadband connection to the cellular mobile network. The 3GPP terminals are also known as 3G (Third Generation) terminals. The 3G terminal can be in the form of a mobile phone or portable computing device. The 3G terminal is also called a user-equipment.

The small cellular base station has a short-range of radio signal transmission for covering a small area known as a femto-cell or an allowed cell. The small cellular base station is typically located in a residence or work place of a user. The small cellular base station usually improves reception and provides greater coverage for the 3GPP terminal within a building, without use of complex and costly dedicated equipments.

It is believed that an indication of access of the user equipment to its femto-cell is needed for a user of the user equipment. The indication can influence the user it his usage of the user equipment.

The application provides an access network. The access network comprises a short-range wireless network that is communicatively connected to a cellular mobile network and to a user-equipment.

The short-range wireless network controls access of the user equipment to an allowed cell of the short-range wireless network. When the user equipment seeks to access the allowed cell, the short-range wireless can determine identity of the user equipment and can check as to whether the user equipment is allowed to access the allowed cell.

The short-range wireless network also sends to the user equipment a 3GPP (Third Generation Partnership Project) network message with at least one additional character. The at least one additional character is provided by the short-range wireless network for indicating the access for the user equipment to the allowed cell. A user of the user equipment can know that the user equipment is accessing the allowed cell based on a display the at least one additional character. The user equipment can be in the form of a portable computing device, such as a personal digital assistant, or a mobile phone.

The short-range wireless network allows the user equipment to access the cellular mobile network. The short-range wireless network can be in the form of a home femto-cell network. The short-range wireless network typically operates in a licensed radio frequency band.

The user equipment typically can access the cellular mobile network via the short-range wireless network or a long range wireless network. The long range wireless network can be a UTRAN (Universal Terrestrial Radio Access Network) as described in UTRAN overall description, 3GPP TS 25.401, http://www.3gpp.org/. The user equipment can transmit voice or data packets signals to the cellular mobile network.

The 3GPP network message can be in the form of a MM (Mobility Management) message. The 3GPP network message and the MM message are described in 3GPP documents, http://www.3gpp.org/.

The short-range wireless network may comprise a short-range wireless access point that is communicatively connected to the user equipment. The short-range wireless access point can be in the form a femto-cell access point. The short-range wireless access point provides a geographical area, also called home area, wherein a user-equipment that is within the geographical area can transmit signals to the short-range wireless access point.

An owner of the short-range wireless access point typically allows certain user equipments to access the short -range wireless access point. The short-range wireless access point is typically installed at the owner's premises. The owner is usually charged by an operator the cellular mobile network for usage of the short-range wireless access point to access services that are provided by the cellular mobile network.

The user equipment can choose to access the cellular mobile network via the short range wireless network of the cellular mobile network or long range wireless network of the cellular mobile network.

The short-range wireless network can comprise a short-range wireless gateway that is communicatively connected to the cellular mobile network and to the short-range wireless access point through a broadband network.

The broadband network provides a high transmission rate of signals. The broadband network can include a DSL (Digital Subscriber Line) network with telephone lines for connecting the short-range wireless access point to a Wide Area Network (WAN), such as the Internet. The short-range wireless gateway can be can connected to the cellular mobile network with an Iu type of interface. The Iu type of interface is described in 3GPP documents, http://www.3gpp.org/.

The short-range wireless gateway can be communicatively connected to a core network of the cellular mobile network. The core network is typically also connected a long range wireless access network. This allows the user equipment to access the core network via the long range wireless access network or the short range wireless access network.

The core network receives voice or data packet signals from the user equipment and transmits these signals to another user-equipment. The another-user equipment can be connected to another cellular mobile network. The core network provides mobility management, session management, and transport for Internet Protocol packet services for the cellular mobile network.

The user equipment can display at least a part of the 3G network message with at least one additional character on a display terminal of the user equipment. Most user equipments typically have support for displaying the 3G network message, such as the MM message, on its display terminal. The user equipment can choose which part of the 3G network message to display and a manner of displaying the part of the 3G network message.

The MM message can have a short network name and a long network name. The long network name and/or the short network name can be extended to include a character or multiple characters to indicate access of the short-range wireless network to a user of the user equipment. The user equipment can choose which network name to display and which part of the chosen network name to display.

The application also provides a short-range wireless access point of an access network. The short-range wireless access point comprises a port and a controller.

The port is communicatively connected to a cellular mobile network and to a particular user-equipment. The port provides a communication means between the cellular mobile network and the particular user-equipment.

The controller controls access of the particular user equipment to the short-range wireless access point. When the user equipment is accessing the short-range wireless access point, the controller sends to the particular user equipment a 3G network message with at least one additional character.

The controller can identify the particular user equipment and it determines its authorization to access the allowed cell. A subscriber or owner of the short-range wireless access point usually selects certain user equipment, such as mobile phones for accessing the short-range wireless access point.

The short-range wireless access point is connected to a cellular mobile network. The short-range wireless access point can operate with the cellular mobile network to authorize the access.

The at least one additional character indicates indicating the access of the short-range wireless access point to a user of the particular user equipment to an allowed cell of the short-range wireless access point. The short range wireless access point allows authorized user equipment to access the allowed cell.

The particular user equipment may display at least a part of the 3G network message with at least one additional character on a display terminal of the particular user equipment.

The application provides a method for indicating access of a user-equipment to an allowed cell of a short-range wireless access point of an access network. The method comprises the step of sending a 3G network message with at least one additional character from the short-range wireless access point of an access network to the user equipment.

The additional character can be displayed by the user equipment to indicate to a user of the user equipment the access.

The sending of the at least one additional character with the 3G network message can be done with no practical delay unlike other methods. This method can be used for different types of user equipment. No changes to core networks or SIM (Subscriber Identity Module) cards are necessary.

A core network of a cellular mobile network is connected to the short-range wireless access point. The core network does not need to be aware of the at least additional character. In other words, this step is done at a network access level and does not burden the core network.

The user equipment can request a RR (Radio Resource) connection with the cellular mobile network. The user equipment makes this request when the user equipment is within transmission range of the short-range wireless access point. The RR connection requests for an access of radio resource of the cellular mobile network by the user equipment.

The method can comprise the step of accessing the short-range wireless access point by the user equipment. The user equipment can later perform the access of the radio resource of the cellular mobile network via the short-range wireless access point. The user equipment may switch the access of the cellular mobile network from a long-range wireless access point, such as a base transceiver station, to the short-range wireless access point.

A cellular mobile network can provide the 3G network message to the short range wireless access point. The request to access the cellular mobile network can trigger the cellular mobile network to provide the 3G network message to the user equipment. The cellular mobile typically allows only subscribers of the cellular mobile network to access the cellular mobile network. The subscribers are authorized to receive services, such as network access, from the cellular mobile network.

The method can also comprise the step of controlling access of the short-range wireless access point. The short-range wireless access point may allow only certain user equipments to access the short-range wireless access point. The short-range wireless access point can determine the access based on an identity of the user equipment.

The identity of the user equipment can be derived from on IMSI (International Mobile Subscriber Identity) information or IMEI (International Mobile Equipment Identity) information. The user's access to the allowed cell can be derived in the access network from SAI (Service Area Identifier) information or a cell-information, and LAC (Location Area Code) information indicated by the user equipment. The allowed cell can be in the form of a femto home cell. The access network can be in the form of a femto access network. This information is available to the short-range wireless access point or the short-range wireless gateway for access control purposes.

The at least one additional character can be provided by the short-range wireless access point. The additional character is used for indicating the access of the user equipment to the short-range wireless access point.

At least a part of the 3G network message with at least one additional character can be displayed on a display terminal of the user equipment. The user equipment can configured to display a part of the 3G network message with at least one additional character on a display terminal of the user equipment. This allows a user of the user equipment to be aware of the access of the short-range wireless access point.

The method may further comprise the step of allowing the user equipment to access the short-range wireless access point by short-range wireless access point. The short-range wireless access point can indicate its presence on the user equipment and can control access of the user equipment to the cellular mobile network via the short-range wireless access point.

The 3G network message can be in the form of a MM (Mobility Management) message, wherein the MM message comprises a network name with the at least one additional character.

### BRIEF DESCRIPTION OF THE DRAWING

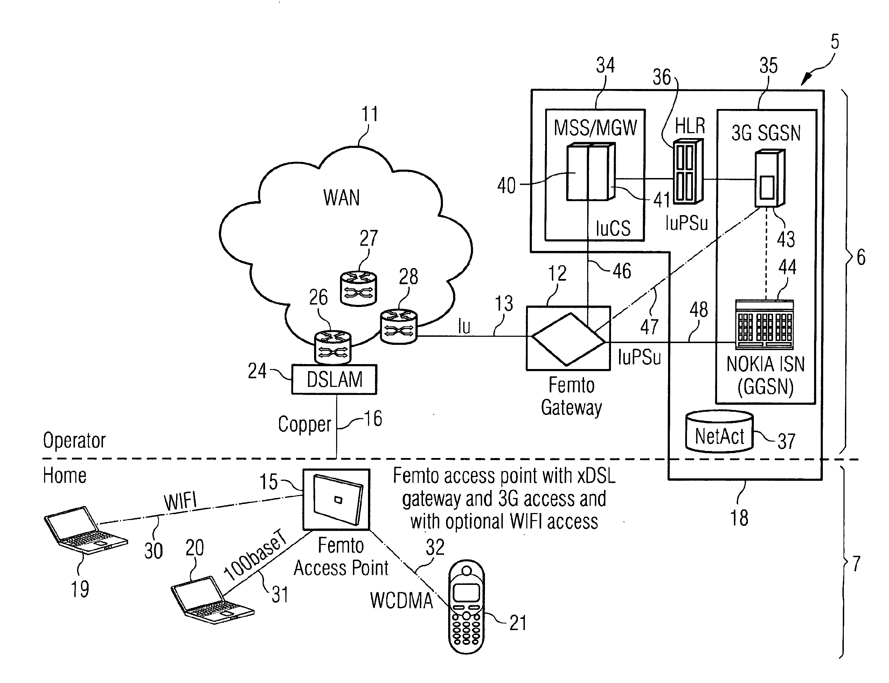

FIG. 1 illustrates an Iu-based femto-cell communication system.

### DETAILED DESCRIPTION

FIG. 1 shows an Iu-based femto-cell communication system 5 that includes an operator network 6, which is connected to a home network 7 via a plurality of copper communication links 16.

The operator network 6 comprises a WAN (wide area network) 11. The WAN 11 is connected to a femto-gateway 12 via an Iu based communication link 13. The femto-gateway 12 is also known as a femto-cell gateway (GW). The femto-cell GW 12 is also connected to a core network 18. The Iu based communication link 13 is described in 3GPP (3rd Generation Partnership Project) specifications, http://www.3gpp.org/.

The home network 7 includes a femto-access-point 15, which is connected to the WAN 11 via the copper communication link 16 and to portable computing devices 19 and 20 as well as to a mobile phone 21. The femto-access-point 15 is also called a femto-cell access point (AP).

The WAN 11 includes a DSLAM (Digital Subscriber Line Access Multiplexer) 24 and a plurality of WAN gateways 26, 27, and 28. The WAN gateways 26, 27, and 28 are connected to each other by communication links. These communication links are not shown in FIG. 1. The DSLAM 24 is connected to the copper communication link 16 and to the WAN gateway 26. The WAN gateway 28 is connected to the femto-cell gateway 12 via the Iu-based communication link 13.

The femto-cell AP 15 has an xDSL (generic Digital Subscriber Line) gateway. The femto-cell AP 15 is connected to the portable computing device 19 via a Wi-Fi (Wireless Fidelity) communication link 30, to the portable computing device 20 via a 100baseT (100 megabit per second baseband) wired communication link 31, and to the mobile phone 21 via a WCDMA (Wideband Code Division Multiple Access) communication link 32.

The core network includes a circuit-switched network 34, a packet-switched network 35, a HLR (Home Location Register) 36, and a NetAct 37.

The circuit-switched network 34 includes a MSS (Mobile Switching Center Server) 40 that is connected to a MGW (Media Gateway) 41. The packet-switched network 35 comprises a Serving GPRS (General Packet Radio Service) Support Node (SGSN) 43 and a Gateway GPRS Support Node (GGSN) 44 that is connected to the SGSN 43.

The HLR 36 is connected to the MGW 41 and to the SGSN 43. The femto-cell GW 12 is connected to the circuit-switched network 34 via an IuCS communication link 46, to the SGSN 43 via a IuPS-c communication link 47, and to the GGSN 44 via a IuPS-u communication link 48. The IuCS communication link 46, the IuPS-c communication link 47, and the IuPS-u communication link 48 are shown in the 3GPP specifications, http://www.3gpp.org/.

In a generic sense, the core network 18 is part of a mobile communication network or of a mobile cellular network. The femto-cell AP 15 is a form of a short-range wireless access point. The femto-cell GW 12 is a form of a short-range wireless gateway.

The mobile phone 21 can also communicate with the core network 18 via a wide-area wireless network of the mobile communication network, when the mobile phone 21 is outside a communication range of the femto-cell AP 15. The wide-area wireless network is also known as a macro radio access. The mobile phone 21 can be connected to the femto-cell AP 15 with a wired communication link or a wireless communication link.

The portable computing device 19, the portable computing device 20, and the mobile phone 21 are forms of a user-equipment (UE). The UE is a form of a 3G (3rd Generation) terminal. The 3G terminal is also known as a 3GPP (3rd Generation Partner Project) terminal. The copper communication link 16 can be in the form of a telephone wire.

The portable computing device 19 or 20 may be able to transmit voice signals to the femto-cell AP 15 and to receive return voice signals from the femto-cell AP 15. They can include a microphone for receiving a human voice signal from a user and a speaker for transmitting a received voice signal to the user. The mobile phone 21 may have a data computing capability and a port for transmission of data packet signals.

The copper communication links 16 and the DSLAM 24 can be replaced by a modem system, such as a cable modem and a cable television structure. The WAN 11 can be in the form of the Internet. The copper communication links 16 and the DSLAM 24 are parts of an IP (Internet Protocol) broadband network.

The femto-cell GW 12 and the femto-cell AP 15 together with the WAN 11 act as a short-range wireless network. The short-range wireless network is part of an access network for the core network 18. The access network typically includes a wide-area wireless network. The wide-area wireless network is not shown in FIG. 1.

The femto-cell AP 15 provides a low power base station at a subscriber's premises. The premise can be a residence or a place of work. The low power base station provides a short-range wireless network that operates independent from the wide-area wireless network of the operator network 6. The femto-cell AP 15 routes communication sessions established over the short-range wireless network through the WAN 11.

The portable computing device 19 or 20 transmits data packet signals to the femto-cell AP 15 and it receives data packet signals from the femto-cell AP 15. Similarly, the mobile phone 21 transmits voice signals to the femto-cell AP 15 and it receives voice signals from the femto-cell AP 15.

The mobile phone 21 may bypass the wide-area wireless network and it instead establishes a communication session through the short-range wireless network, when it is within a communication range of the femto-cell AP 15. In this manner, the mobile phone 21 can communicate over two different communication networks without requiring any changes to the mobile phone 21.

The home cell network 7 permits certain user equipments, such as the portable computing device 19 or 20, and the mobile phone 21 to access the femto-cell AP 15. The femto-cell AP 15 and/or the femto-cell GW 12 controls this access.

During a RR (Radio Resource) connection with the mobile phone 21 and the operator network 6, the operator network 6 can send none, one, or more MM information messages to the mobile phone 21. If more than one MM information message is sent, the MM information messages have different contents. The MM information message is described in 3GPP TS 24.008, http://www.3gpp.org/.

The MM information message contains both a long network name and short network name. The MM information message or the network name information are used to provide a Network Identity and Time Zone (NITZ) information. The provision of the NITZ information is shown in 3GPP TS specification 22.042, http://www.3gpp.org/.

The NITZ information and the MM information are believed to be widely supported even though they are optional features a network, according to 3GPP documents, http://www.3gpp.org/.

The mobile phone 21 receives the MM information message and it may select which network name of the MM information message to display on its display terminal. This is described in 3GPP TS 22.042 document, http://www.3gpp.org/. For example, Nokia S40 and Nokia S60 terminals select the long name to display on its terminals.

The length of the short network name length or the long network name is not limited as such, as long as it can be fit into L3 message available octets, according to 3GPP TS 24.008, http://www.3gpp.org/. The network operator can decide on which network name to display and on which part of the selected network name to display.

The DSLAM 24 provides multiple DSL (Digital Subscriber Line) modem ports through which client modems of the femto-cell AP 15 may connect. The DSLAM 24 multiplexes client data communication from the multiple DSL modem ports into the WAN 11. Return signals from the WAN 11 are de-multiplexed by the DSLAM 24 for transmitting to the client modems via the DSL modem ports. The DSL modem port transmits data or voice signals over copper communication link 16 at high speed.

The Wi-Fi communication link 30 is used as a wireless connection for transmission of data or voice signals. The WCDMA communication link 32 is used as a radio communication link for mobile phones. The 100baseT wired communication link 31 is intended to carry Ethernet protocol signals.

The core network 18 utilizes the home network 7 for wireless or radio communication. It provides circuit-switched transmission of the voice signals and packet-switched transmission of the data packet signals. The MSS 40 and the MGW 41 support the circuit switched transmission, whereas the SGSN 43 and the GGSN 44 support the packet-switched transmission.

The SGSN 43 delivers data packet signals between the portable computing device 19 or 20 and the GGSN 44. The SGSN 43 maintains a data structure of a PDP (Packet Data Protocol) context, which contains a subscriber's session information during an active communication session.

The GGSN 44 acts as an interface between the SGSN 43 and other network. The other network is not shown in FIG. 1. The GGSN 44 converts data packets from the SGSN 43 into an appropriate Packet-Data Protocol (PDP) format and send them to the other network.

The MSS 40 along with the MGW 41 acts as a Mobile Switching Center (MSC) for transferring the voice signals between the mobile phone 21 and another network.

The HLR 36 maintains a database of subscriber data. The subscriber data may include subscriber record information, a MSISDN (Mobile Subscriber International Service Digital Network Number) information, a routing-information, or an Access Point Name (APN) information.

The NetAct 37 provides a network monitoring tool for operators of the operator network 6 to view a performance of the operator network 6 in delivering service to its subscribers.

A method for indicating access of the femto-cell AP 15 by the mobile phone 21 is shown below. The access is indicated on a terminal display of the mobile phone 21.

If the mobile phone 21 is within a transmission range of the femto-cell AP 15, the mobile phone 21 establishes a RR (radio resource) connection with the operator network 6 via the femto-cell AP 15.

The RR connection then triggers the core network 18 to send an MM information message to the mobile phone 21. The MM information message is sent to the mobile phone via the femto-cell GW 12 and the femto-cell AP 15.

The femto-cell AP 15 or the femto-cell GW 12 interacts with the MM information messages that are sent by the core network 18 in an appropriate way, and it allows a network operator a way to control and to modify femto-cell indication type as well as sending conditions for the femto-cell indication.

The femto-cell AP 15 later receives the MM information message and it then performs an access control to check as to whether the mobile phone 21 is allowed to access the particular femto-cell AP 15. The MM information message includes a network name.

The access control can be is done in an idle-mode access control phase or in an active-mode access control phase of the mobile phone 21. In the idle mode-access control phase, the mobile phone 21 is connected to the operator network 6 and it is not in a communication session with another mobile phone. In the active mode-access control phase, the mobile phone 21 is connected to the operator network 6 and it is in a communication session with another mobile phone.

The idle mode-access control phase can be based on an IMSI (International Mobile Subscriber Identity) information or an IMEI (International Mobile Equipment Identity), an SAI (Service Area Identifier) information, or an LAC (Location Area Code) information of the mobile phone 21.

The femto-cell AP 15 afterward receives the MM information message and it adds additional text characters, such as a "F" character, to the network name. The additional text characters can indicate that the mobile phone 21 is seeking access to the femto-cell AP 15. The femto-cell AP 15 later forwards the MM information message to the mobile phone 21.

The mobile phone 21 then receives the MM information message and displays the network name on its display terminal. If the mobile phone 21 has permission to access the femto-cell AP 15, the femto-cell AP 15 allows the mobile phone 21 to access the femto-cell AP 15.

In a broad sense, the MM information message is a form of a 3GPP message or a 3GPP network message.

This implementation advantageously affects only to the femto-cell AP 15 and/or femto-cell GW 12 without modification of other network elements. Moreover, the subscriber can continue to enjoy benefits associated with the femto-cell, such as low cost, high speed, and high quality voice despite being deep within a building at locations that may otherwise not be reliably serviced by a wide-area wireless network service provider.

The core network 18 normally generates the MM information. The method assumes that the femto-cell AP 15 or the femto-cell GW 12 sends a femto-cell home cell indication to the mobile phone 21. The core network 18 does not make any distinction regarding the access of the femto-cell AP 18.

A mobility management (MM) layer is normally transparent to an access network, which includes the femto-cell AP 15 and the femto-cell GW 12. The MM layer handles the MM information message.

The access control of the mobile phone 21 can be performed by the femto-cell GW 12, and/or the femto-cell AP 15. The receipt of the MM information message and the addition of the additional text characters to the network name of the MM information message can be performed by the femto-cell GW 12 and/or the femto-cell AP 15. The mobile phone 21 may displays a part of the network name, or the full network name, on its display terminal.

In some cases, a femto-cell user may be allowed to make a Location Update via a femto-cell that is operating with the same LAC (Location Area Code) as the femto-cell AP 15, due to LAC reuse concept for a femto-cell in the network. In this case, the user uses the active mode access control.

In short, the femto-cell AP 15 or the femto-cell GW 12 checks during an access control as to whether a subscriber is in it's home cell or equivalent allowed cell. The femto-cell AP 15 or the femto-cell GW 12 then sends the MM information message to a 3G terminal of the subscriber. The MM information message includes the network name and additional characters for indication of femto-cell access status.

The femto-cell AP 15 or the femto-cell GW 12 interacts with the MM information message in an appropriate way, and allows a network operator a way to control and to modify the femto-cell indication type as well as sending conditions.

### List of abbreviations

- 100baseT: 100 megabit per second baseband
- 3GPP: 3rd Generation Partnership Project
- AP: Access Point
- APN: access point name
- DSL: Digital Subscriber Line
- DSLAM: Digital Subscriber Line Access Multiplexer
- GGSN: Gateway GPRS Support Node
- GPRS: General Packet Radio Service
- GW: Gateway
- HLR: Home Location Register
- IMEI: International Mobile Equipment Identity
- IMSI: International Mobile Subscriber Identity
- IOT: Inter-Operability Testing
- IP: Internet Protocol
- LAC: Location Area Code
- MGW: Media Gateway
- MM: Mobility Management
- MNC: Mobile Network Code
- MSC: Mobile Switching Center
- MSISDN: mobile subscriber international service digital network number
- MSS: Mobile Switching Center Server
- NITZ: Network Identity and Time Zone
- O&M: Operation and Maintenance
- PDP: Packet Data Protocol
- RR: Radio Resource
- SAI: Service Area Identifier
- SAT: SIM application Toolkit
- SGSN: Serving GPRS Support Node
- SIM: Subscriber Identity Module
- UE: user-equipment
- UTRAN: Universal Terrestrial Radio Access Network
- WAN: wide area network
- WCDMA: Wideband Code Division Multiple Access
- Wi-Fi: Wireless Fidelity
- xDSL: generic Digital Subscriber Line

### Reference numbers

- 5: Iu-based femto-cell communication system
- 6: operator network
- 7: home network
- 11: WAN (wide area network)
- 12: femto-gateway
- 13: Iu-based communication link
- 15: femto-access-point
- 16: copper communication link
- 18: core network
- 19: portable computing device
- 20: portable computing device
- 21: mobile phone
- 24: Digital Subscriber Line Access Multiplexer (DSLAM)
- 26: WAN gateway
- 27: WAN gateway
- 28: WAN gateway
- 30: a Wi-Fi (wireless fidelity) communication link
- 31: 100baseT (100 megabit per second baseband wired communication link)
- 32: WCDMA (Wideband Code Division Multiple Access) communication link
- 34: circuit-switched network
- 35: packet-switched network
- 36: HLR (Home Location Register)
- 37: NetAct
- 40: MSS (Mobile Switching Center Server)
- 41: MGW (Media Gateway)
- 43: Serving GPRS Support node (SGSN)
- 44: Gateway GPRS Support Node (GGSN)
- 46: IuCS communication link
- 47: IuPS-c communication link
- 48: IuPS-u communication link

## Claims

1. An access network, the access network comprising a short-range wireless network, the short-range wireless network being communicatively connected to a cellular mobile network and to a user-equipment, wherein the short-range wireless network is provided
for controlling access of the user equipment to an allowed cell of the short-range wireless network, and
for sending a 3GPP (Third Generation Partnership Project) network message with at least one additional character to the user equipment, the at least one additional character being provided by the short-range wireless network for indicating the access for the user equipment to the allowed cell.

2. The access network of claim 1
**characterized in that**
the short-range wireless network comprises a short-range wireless access point, the short-range wireless access point is communicatively connected to the user equipment.

3. The access network of claim 2
**characterized in that**
the short-range wireless network further comprises a short-range wireless gateway, the short-range wireless gate being communicatively connected to the cellular mobile network and to the short-range wireless access point through a broadband network.

4. The access network of one of the preceding claims
**characterized in that**
the short-range wireless gateway being communicatively connected to a core network of the cellular mobile network.

5. The access network of one of the preceding claims
**characterized in that**
the user equipment is provided to display at least a part of the 3G network message with at least one additional character on a display terminal of the user equipment.

6. A short-range wireless access point of an access network, the short-range wireless access point comprises
a port, the port being communicatively connected to a cellular mobile network and to a user-equipment,
a controller, the controller being provided
for controlling access of the user equipment to the short-range wireless access point, and
for sending to the user equipment a 3G network message with at least one additional character, the at least one additional character being provided for indicating the access for the user equipment to an allowed cell of the short-range wireless access point.

7. The short-range wireless access point of claim 6,
**characterized in that**
the user equipment is provided to display at least a part of the 3G network message with at least one additional character on a display terminal of the user equipment.

8. A method for indicating access of a user-equipment to an allowed cell of a short-range wireless access point of an access network, the method comprising the step of
sending a 3G network message with at least one additional character from the short-range wireless access point of an access network to the user equipment.

9. The method of claim 8,
further comprises the step of
accessing the short-range wireless access point by the user equipment.

10. The method of claim 8 or 9,
further comprises the step of
providing the 3G network message by a cellular mobile network to the short range wireless access point.

11. The method of one of the claims 8 to 10,
further comprises the step of
controlling access of the short-range wireless access point.

12. The method of one of the claims 8 to 11,
further comprises the step of
providing the at least one additional character by the short-range wireless access point.

13. The method of one of the claims 8 to 12,
further comprises the step of
displaying at least a part of the 3G network message with at least one additional character on a display terminal of the user equipment.

14. The method of one of the claims 8 to 13,
further comprises the step of
allowing the user equipment to access the short-range wireless access point by short-range wireless access point.

15. The method of one of the claims 8 to 14,
**characterized in that**
the 3G network message is in the form of a MM (Mobility Management) message, the MM message comprises a network name with the at least one additional character.
